Europäisches Patentamt

European Patent Office

Office européen des brevets

(11) Publication number: **0 318 412**
**A1**

## EUROPEAN PATENT APPLICATION

(21) Application number: **88560001.5**

(22) Date of filing: **30.09.88**

(51) Int. Cl.⁴: **A 01 C 7/04**
**A 01 C 7/16**

(30) Priority: **01.10.87 ES 8702799**

(43) Date of publication of application:
**31.05.89 Bulletin 89/22**

(84) Designated Contracting States: **ES FR GB IT NL**

(71) Applicant: **Montanana Basset, Vicente**
**Paseo Aragon, 52**
**E-46120 Alboraya (ES)**

(72) Inventor: **Montanana Basset, Vicente**
**Paseo Aragon, 52**
**E-46120 Alboraya (ES)**

(74) Representative: **Sanz-Bermell Martinez, Alejandro**
**Baron de Cárcer, 48**
**E-46001 Valencia (ES)**

The title of the invention has been amended (Guidelines for Examination in the EPO, A-III, 7.3).

(54) **Single seeder.**

(57) The present seeder consists of a machines provided with a seed and eventually insecticide distributor which are associated with the movement of their wheels (7,8), so that by means of a transmission is produced: a reciprocating or back and forth motion (22) of a curtain provided with holes in front of an egg- or tear-shaped orifice of the classifying-aligning cylinder (28) in the interior of which some shovels (29) connected with the movement of the other wheel regulate and direct towards the outlet, or provided said cylinder with egg- or tear-shaped orifices and a fixed aligner in the interior of the structure; or constituted of two cylinders which have a comparative synchronized movement, so that both have some orifices, and the interior one with an egg- or tear-shaped form, effecting the comparative movement of both said opening and closing. Its front part is constituted by a retractable and hinged furrow opener (11) supported by a damper or spring, and its rear part by a ploughshare and/or roller. The seed passage can be regulated according to its size as also the depth of its fall and the height of the plough. It has inside a "V" shaped leveller of the already sown ground which is trod down by the rear roller.
To be employed in agriculture for seed sowing.

FIG. 4

FIG. 3

EP 0 318 412 A1

## Description

The applicant of the present Patent of Invention declares that same is new and unknown and not deduced from the technological state.

In this patent application has to be understood the applied protection bearing in mind that the specific form, the annexed drawings as also the explanations given in its contents are practical realizations which have to be considered as way of example, amd which determine the comprehension of its essence, so that there has to be considered as included in the present protection every modification which is comprised in the present application.

The present invention consists of a seeder.

There exists as antecedent, which informs technically the basis of the present seeder the Spanish Patent nº 862.570, of 14th October 1984, of the same inventor as the present one, which produced the distribution of the seeds by means of some reeding grooves, which, though they operate well, produce some damage when the seed species, though being of the same type, has size differences that are frequent in all organic bodies.

The reason why this new seeder has been created is also that one same machine without technical complications of difficult and skilfull solution has to make possible the sowing of all type of seeds. This was an inconvenience of the seeder of the above mentioned patent, as it was necessary to substitute its reeding cylinder each time the size of the seed changed.

Another inconvenience all the seeders have in common is the special care the feeder must have with the seed, because in case same is scratched, crushed and,of course, broken, it will not germinate.

As above said, all organic bodies have some margins of volume, and thus also the seeds, i.e. a melon seed will have a size oscillating in proportions between a pricnipally known dimension.

The basis and soul of this machine put into effect what has been quoted by achieving that each seed, though it has not an identical size as the foregoing or the following one, is dosed in a unitary form.

In order to make the following explanation clearer and better understandable, there arejoined to this specification, forming part of it, seven sheets of drawings which show in 22 figures the essence of what makes up the present invention.

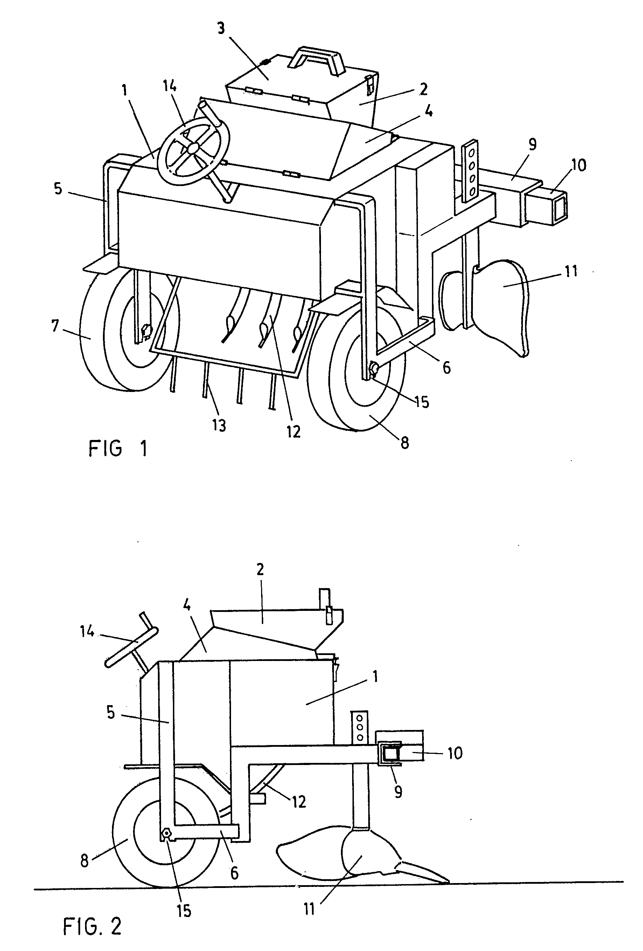

Figures 1 and 2 show in perspective and cross-section the machine in question, on which can be seen in -1- the body of the machine, in -2- the seen container, -3- its lid which can be fastened by means of cramps of other similar means. -4- is an inspection hole through which one can get into the interior of the machine in order to carry out adjusting or maintaining operations. -5- is the bridge which supports the wheels -7- and -8- that are fastened from underside as shown at -15-. Said bridge is secured by the strengthening frame -6-. The coupling to the tractor is effected by means of the pieces -9- and -10-under which is arranged a ploughing device -11- of adjustable height, in order to open the furrow and soften the soil into which the seed will fall and which will be buried, because the ploughshare -13- is dragged over the surface of the soil once the seed has fallen through the feeder -12-.

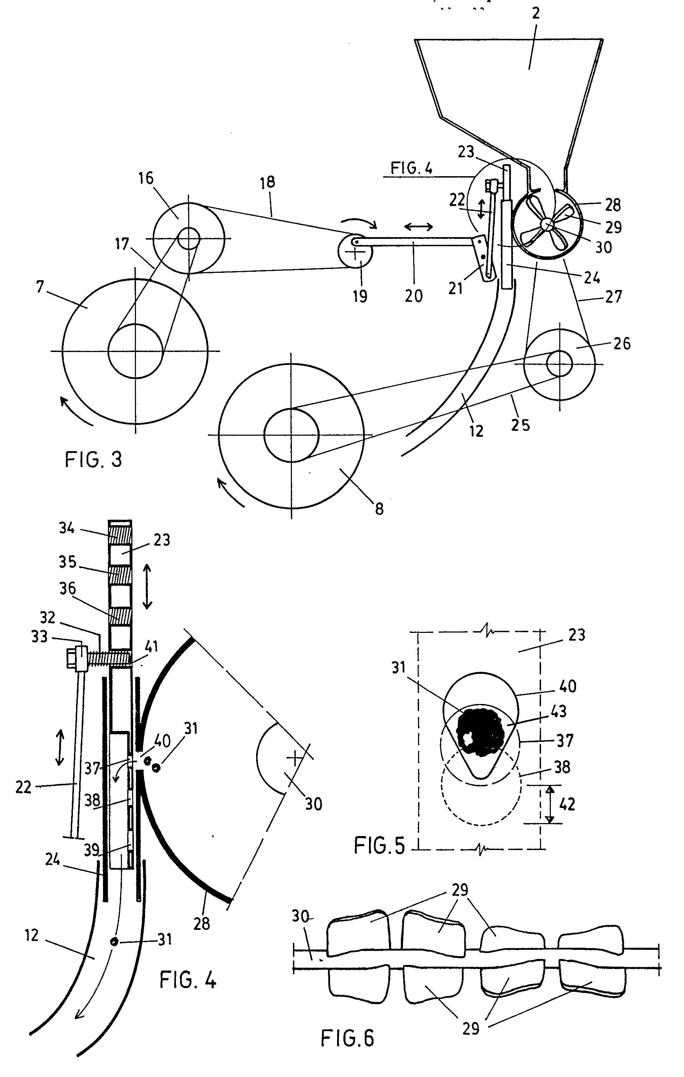

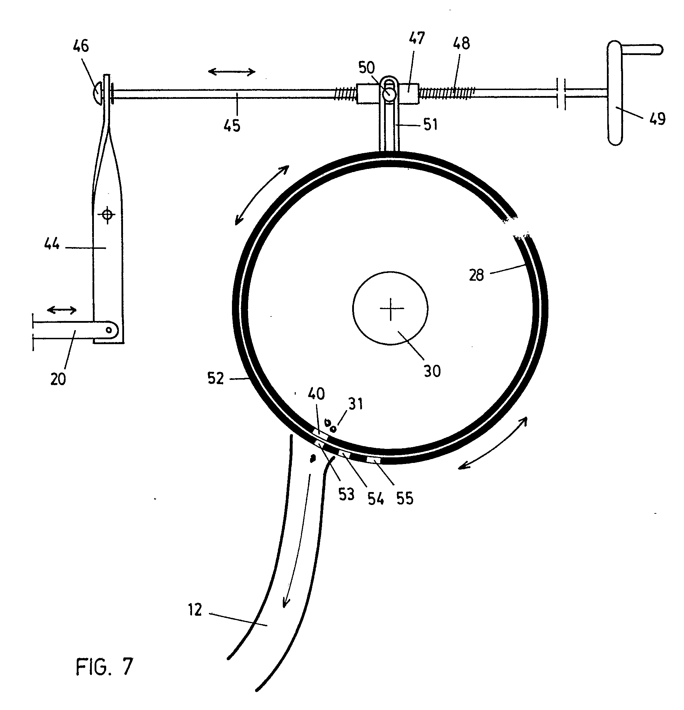

An example of the performance of the feeder is schematized in fig. 3. In the feeder exist two coordinated movements: the one of the wheel -7- and that of the wheel -8-, each of them accomplishing an action.

Wheel -8- is joined by means of the corresponding gearing down -25, -26-, -27- to the shovels which stir the seed and avoid with this movement that it gets soggy. Its shape will be explained when describing fig. 6.

The inner axle -30- of the body -28- makes possible that said shovels -29- rotate.

The movement of the seed in the cylinder -28- is essential to avoid that the seeds compress at the outlet and by forming an arch obstruct the dosing at the outlet orifice.

The clsoing device itself is coordinated by means of a gearing down linked to the wheel -7-, the gearing -16-, -17- and -18- of which can be changeable, so that the wheel -19 effects some concrete revolutions, i.e. the machine furnishes a specific number of seeds per covered lineal metre.

The wheel -19- is joined to a connecting rod -20- which transmits a back and forth motion on a piece -21- which has a central axle so that the movement is transmitted also back and forth to the piece -22- joined to -23-.

This piece -23- is a rod running in the interior of piece -24- joined to the cylinder -28-.

Fig. 4 shows diagrammatically the behavior of the seed when passing through the feeder.

On this figure can be seen the rod -23- which can be joined to the connecting rod -22- at four points; the one marked with -34- which will plug the outlet -35- and will open the one marked with -39-, the one with -36- will open the outlet -38- and the one with -41- will open the outlet to the orifice -37-.

The working of this feeder is identical with any of the positions -35-, -36- and -41-, but each of them will be selected as the orifices -37-, -38- and -39- are of different size, the orifice which opens in the cylinder -28- can adapt itself to the size of the seed.

The course of the seeds is as follows: The shovels rotating inside the cylinder 28- make the seed mass -31-spongy. The orifice -40- is made from outside leaving an egg-shaped window shown in fig. 5. The oscillation as indicated with -42- in this fig. 5 leaves only intermittently open a position of said window, so that it opens and closes itself as many times as the driving wheel -19- rotates, falling each time one sole seed, as it has been selected the position of the piece -23- which adapts to the size of the seed.

The pieces -32- and -33- are those which introduced into the mentioned threads vary the position of this piece.

Fig. 5 shows the orifice -40- of the egg-shaped feeder made in the cylinder -28- and partially swept by the piece -23-The oscillation -42- makes possible that each time there is falling only one seed -31-. If the seed is smaller, is used smaller outlet orifice, for example -38-. Thus according to the position of the piece -23-, the outlet orifice -43- adapts the required size.

It is moreover possible that the piece -22- has a part of it spiral-shaped, which will allow in some cases to lengthen or to shorten it in order to adapt it exactly to the size of the seed.

The shovels situated inside the cylinder -28- have a helicoidal form. They are arranged each one with regard to the other perpendicularly, but each pair of them has a warping arranged in such a way that it tends to move the seed to a point situated between each pair, just where is situated the orifice described in fig. 5.

In a possible execution can the cylinder -28- provided with these stirring shovels be inside the other cylinder provided with the orifices -53-, -54- and -55- which allow likewise and in the same way, the adjustable outlet of seeds of different sizes my modifying the position of the orifice -40- with regard to the mentioned ones, which will produce the same effect. The oscillation of the exterior cylinder can be effected by means of a connecting rod -20- which through a piece -44-, that is fastened at its centre, provides a back and forth motion to the axle -45- joined at -47-, -50- and -51- to the outer cylinder -52-. The regulation of the size or of the position of the cylinder -52- will be effected by means of the screw -49- and the thread -47- and -48-.

The courses of the wheels, the left as also the right one, can be modified by substituting the idlers or either using a variation device of the course, such as can be a change of bicycle pinions, thus obtaining an endless number of combinations.

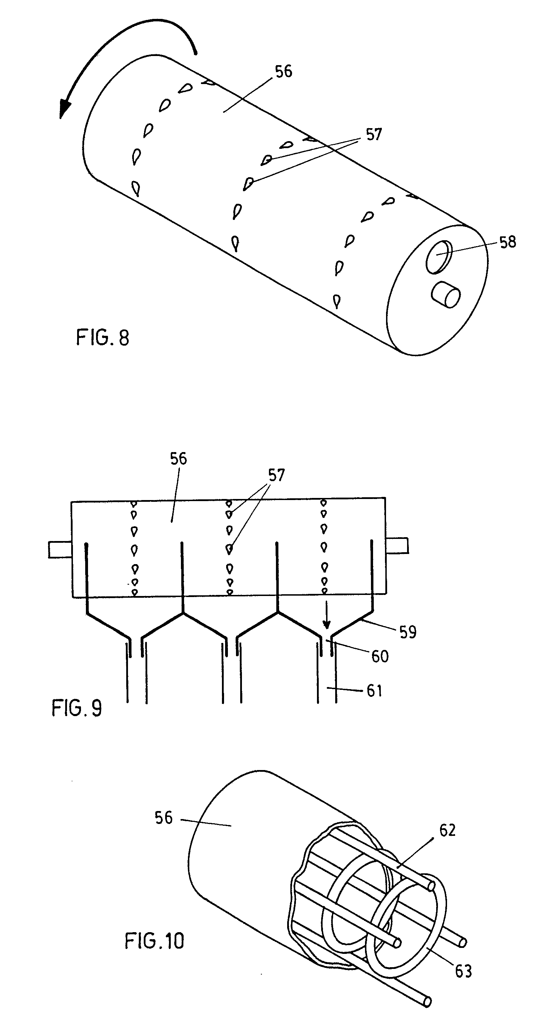

According to fig. 8 it is also possible to arrange one or several rows of orifices in the way described in fig. 5, marked with -57-, on a cylinder -56- which in its interior has a structure of rings -63- shown in fig. 10 and rods -62- on the same figure, so that this interior structure attends to stir the seed and to make it spongy, which in relation to the form of the orifices allows a regular fall of the seeds as shown in fig. 9. In this fig. 9 is shown the hopper -59- which collects the seed at its fall at -60-, the orifice of same, and -61- the communi cation orifice at the outlet to the soil.

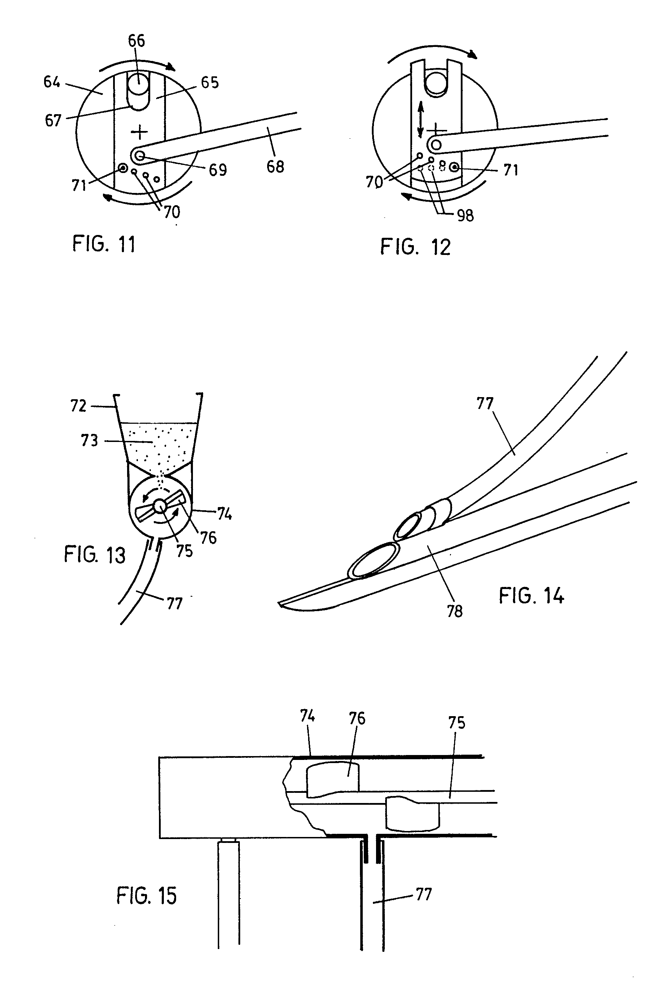

The control device of the movements of the connecting rods in order ro regulate their eccentricities, is shown in figures 11 and 12 which represent:

Fig. 11 shows an outline detail of fig. 3 which represented the connecting -20-, and the wheel -19- shows the connecting rod -68- joined to the pivoting point -69- which can be separated by means of the alignment of the orifices -70- and -71-, being -64- the body of the eccentric and -65- the sliding device which through its adjustment permits the approach of the axle -69- or its separation from the centre of this bodey, making possible a greater or smaller oscillation of the seed distributing device, being its moving limit determined by the position of the form marked with -67- in relation with the pivot -66-.

Fig. 12 shows a variation of the position of the eccentric of fig. 11, on which can be seen the lower orifices -98- which owing to their attachment permit to move the axle -69- nearer or away the pivotal centre of the eccentric.

This seeder can also be provided with an insecticide dosing device, so that at the same time a seed is placed into the soil, will fall on it a certain quantity of insecticide which will avoid that birds or the small rodents abounding in the country, eat or damage it.

This insecticide dosing device is constituted by a chute or hopper -72-, the powder contents -73- in it will fall through an insecticide dosing device that joined to the rotation axle , which will facilitate the opening and closing of the seed feeder and produce synchronically the fall of a concrete quantity of insecticide owing to the rotation the warped shovels -76- effect on the axle -75-. The respective explanation will be amplified, when describing fig. 15.

The outlet will take place through the pipe -77- of fig. 14 where there is described the seed outlet -78- and which corresponds to -12- in fig. 1.

Fig. 15 shows a working detail of the insecticide distributing device on which can be seen the outlets -77- which receive the insecticide moved by the warped shovels -76- arranged in the cylinder -74- and driven by the axle -75-.

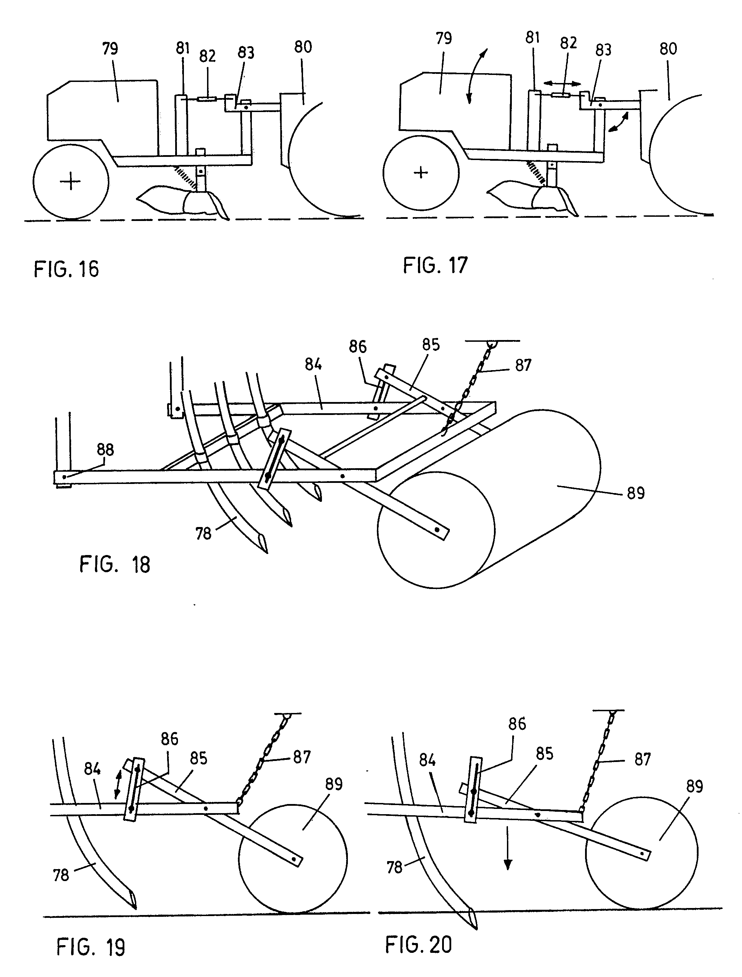

The levelling and height regulating device of the fall of the seeds is constituted by a crank -14- on fig. 1 which regulated the height of the channels -12-. This can also be seen in a possible realization on figures 18 to 20 described below.

On figures 16 and 17 is shown a height regulation device of the furrow openers so that they permit a regulation of the depth into which the seed has to fall. This is constituted by a screw -82- situated between the junction-piece -83- to the tractor -80- and the vertical frame -81- linked to the body of the seeder, so that the tension effected by the screw with double effect -82-determines the greater or smaller height of the opener with regard to the furrow it is producing and which will determine the depth of the seed fall.

Figures 18 to 20 show a height regulation device of the pipes -78- which makes possible to place the seed into the furrow opened by the openers described in the previous figure.

The regulation device is constituted by an inferior frame -84- which is articulated at one end being situated below the principal frame of the seeder. It is supported at the other end by means of the chain -87- which avoids that the pipes -78- disengaged from their union to the feeders when there takes place a modification of the position or it raises. This regulation device is constituted by the roller -89- the task of which is to flatten the soil after having placed the seed into it. The roller -89- is supported by two arms -85- that are fastened on the device -86- which regulates its slope.

Fig. 19 shows a profile of this piece on which the position of the feeder is at the level of the soil, whilst in fig. 20 is shown a position where the lower part is below the surface of the ground.

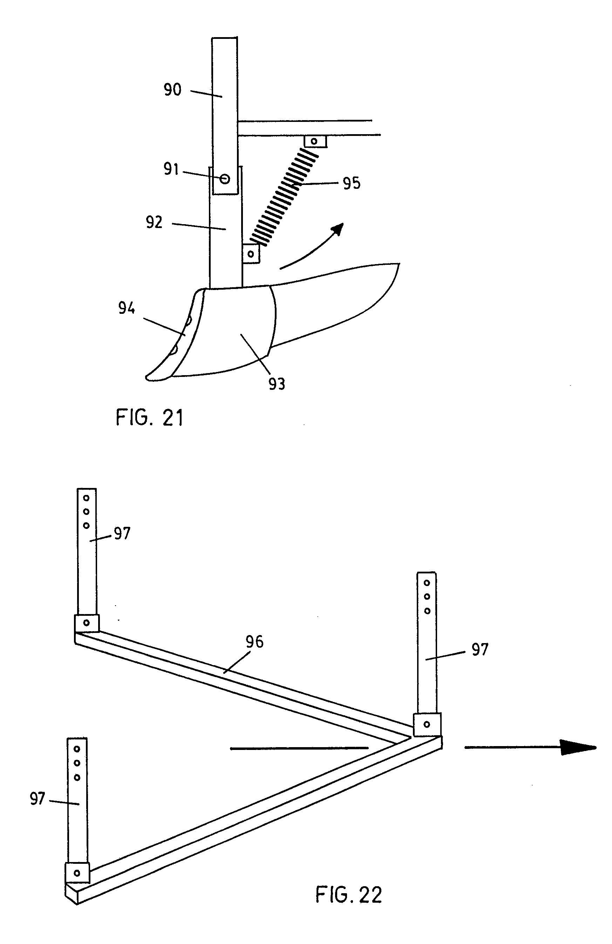

As there happen sometimes breakages of the openers when they are running the way below the ground which the tractor is carrying out, there has been provided, according to fig. 21, a piece supporting the opener -93- which has an articulation -91-supported by a very rigid spring or damper -95- situated in a fastening preferably of the lower arm -92-, so that, when there is produced the forward traction from the body or frame -90-, and the opener finds at its front part -94- any difficulty, this does not deform the structure of the frame -90-, as it articulates and overcomes the difficulty by flexion or compression of the damping device or spring -95-.

Besides the roller shown in figures 18, 19 and 20 there is produced a flattening of the soil by incorporating some fixed pieces arranged below the seeder frame on ground level and with an angle pointed in the direction of the course, besides covering the opened furrows thus burying the seed, they will flatten the ground.

On fig. 22 can be seen the adjustable fixings -97- and the flattening arms -96-. There can be provided as many pieces as the mentioned one, as the seeder has pipes through which falls the seed.

Everything explained refers to the unitary working of each feeder, as each of them has the possibility to open, close, invalidate itself, or to be regulated according to needs. There can be constituted on the same seeder as many feeders as needed with the purpose to facilitate the swoing of strips as broad as necessary.

After having explained the characteristics of this seeder, there is concretized the protection of the present Patent of Invention in the following

## Claims

1. - Seeder characterized because it is constituted by a frame which is joined to a tractor being supported at least by means of two wheels and which is provided with
- a seed container,
- a manhole cover for access to the device and to the interior mechanism and its regulation,
- a seed dosing device joined to the seed container,
- a plough opening the furrows or similar at the front part, and a ploughshare, a roller or similar at the rear part, in contact with the ground,
- a height regulation device of the plough or front furrow opener, and a second depth regulation device of the channels or pipes of the dosing device with regard to the ground,
- an eccentricity regulation device of the connecting rods,
- an insecticide dosing device,
- a retraction device of the furrow opener and
- a leveller of the already sown ground.

2.- Seeder according to the first claim, characterized because the seed and insecticide container have the form of a hopper.

3. - Seeder according to the two previous claims, characterized because the seed container can be provided with a grooved strip which supports the weight of the seed.

4.- Seeder according to the three previous claims, characterized because the container is joined at its lower part of the seed dosing device.

5.- Seeder according to claim 1 and 4, characterized because the dosing device is constituted by a horizontal cylinder provided with egg-shaped outlets; in the interior of the cylinder there is a classifying-aligning device constituted by some shovels each one placed perpendicularly with regard to the following one and in a warped way which direct the seeds towards the egg-shaped outlet; and in the interior of the cylinder opens and closes a curtain provided with back and forth motion each egg-shaped orifice with a frequency tht is proportional to the lineal running of the seeder and liable to be regulated, but never closing it completely.

6.- Seeder according to the first claim, characterized because the dosing device is made up by a horizontal cylinder which is provided with some egg-shaped outlet; in the interior of the cylinder there is a classifying-aligning device constituted by some interior circular and transversal pipes.

7.- Seeder according to claim 5, characterized because the most favourable outlet of the seed in the cylinder is situated approximately in the zone comprised between $130^0$ and $220^0$ and preferably not situated at the lower point, being this position changed according to the form, weight and volume of the seed.

8.- Seeder according to claim 1 and 5, characterized because the movement of the dosing curtain is produced by the revolution of a wheel which through a reduction is transformed into a back and forth motion that is transmitted by some connecting rods to this zome traversed by an appreciably flat piece and provided with one or several orifices, in such a way that the back and forth motion of this piece with regard to the orifice of the cylinder opens at its maximum point a greater orifice than the size of a seed and inferior to the one of the two seeds situated one near the other, and at its minimum point, without closing completely the orifice of the dosing cylinder, avoids that the seed goes through the opening.

9.- Seeder according to claim 8, characterized because the regulating devices makes possible to place in front of the orifice of the cylinder several sizes of curtain orifices, and its travel can moreover be regulated by shortening or lengthening slightly by means of a screw mechanism the length of the connecting rods that act upon the curtain.

10.- Seeder according to claim 5, characterized because the shovels of the classifying-aligning device have a movement which is porportional to one of the wheels depending the rotation of their shovels, according to their development, being preferable the one of nine revolutions per turn of wheel.

11.- Seeder according to claim 1, characterized because the height regulating device of the measurements of the dosing device is made up by a screw which rises or lowers the level of the seed outlet.

12.- Seeder according to the first claim, characterized because the wheels are entered at the lower part of the fork, and are joined each by means of transmissions to the regulation devices to dose the seeds or the insecticide as the case may be.

13.- Seeder according to claims 1, 5 and 8, characterized because a position of the curtain provided with a back and forth motion, can remain blind with regard to the outlet orifice so that it does open the orificie and thus there doe not fall seeds in this position.

14.- Seeder according to claims 1, 5 and 8, characterized because the other wheel which has not been mentioned in claim 9, provides a movement to the dosing device which can be variable and determines the frequency of the seed outlet.

15.- Seeder according to claims 5, 8, 9, 13 and 14, charac terized because the dosing device is provided with a second outer cylinder provided with regulation and orifices which according to their relative postion with regard to the egg-shaped orifice will make possible the passage and fall of the seed according to the frequency of its back and forth motion.

16.- Seeder according to claim 1 and 8, characterized because the back and forth motion is regulated by an eccentric which can move on its axle producing an adjustable eccentricity being fastened the slide, which modifies the eccentricity, on the eccentric by some orifices at increasing distances.

17.- Seeder according to claim 1, characterized because the furrow opener is provided with a retraction device constituted by the opener situated on an arm which is articulated on an axle and supported by a damper or spring being susceptible to absorb impacts or crumbs of the ground.

18.- Seeder according to the first claim, characterized because the rear part is provided with a flattening device of the sown ground constituted by a horizontal height adjustable "V" shaped piece for each dosing element, after which levelling the ground is tred down by means of a roller situated at the rear part of the seeder and which supports its weight.

19.- Seeder according to claims 1 and 2, characterized because the insecticide dosing device is constituted by a cylinder provided in its interior with some warped shovels each one arranged with regard to the next one in an opposed position, and the movement of which is synchronized with the dosing device so that with each unity of seed falls at the same moment a quantity of insecticide powder.

FIG 1

FIG. 2

EP 0 318 412 A1

FIG. 3

FIG. 4

FIG.5

FIG.6

FIG. 7

FIG. 8

FIG. 9

FIG.10

FIG. 11

FIG. 12

FIG. 13

FIG. 14

FIG. 15

FIG. 16

FIG. 17

FIG. 18

FIG. 19

FIG. 20

FIG. 21

FIG. 22

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | US-A-4030428 (TRUAX) <br> * column 2, line 44 - column 7, line 42; figures 1-8 * | 1, 4, 10, 11, 12, 17, 19 | A01C7/04 <br> A01C7/16 |
| A | SU 184026 derwent | 1, 5, 10, 15, 16 | |
| A | DE-C-28215 (NIELSEN) <br> * page 1 - 2; figures 1, 2, 3 * | 1, 5, 7 | |
| A | DE-B-1095039 (ÖVERUMS BRUK) <br> * column 3 - column 4, line 46; figures 1-5 * | 1, 5, 8 | |
| A | AU-A-19141/67 (MATHESON) <br> * page 3, line 11 - page 6; figures 1, 2, 3 * | 1, 4, 5, 6 | |
| P,A | US-A-4715515 (STEILEN) <br> * column 4, line 12 - line 37; figures 3, 4, 5 * | 1, 3, 4 | |
| A | US-A-3533367 (SCHUERMANN) <br> * column 2, line 38 - column 4, line 39; figures 1, 2, 3 * | 1, 11, 18 | TECHNICAL FIELDS SEARCHED (Int. Cl.4 ) <br><br> A01C |

The present search report has been drawn up for all claims

| Place of search | Date of completion of the search | Examiner |
|---|---|---|
| THE HAGUE | 01 MARCH 1989 | VERMANDER R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P0401)